Europäisches Patentamt

European Patent Office

Office européen des brevets

(19)

(11) Veröffentlichungsnummer: **0 286 639**
**B1**

(12) **EUROPÄISCHE PATENTSCHRIFT**

(45) Veröffentlichungstag der Patentschrift: **14.11.90**

(51) Int. Cl.⁵: **B 60 R 21/32**

(21) Anmeldenummer: **87900082.6**

(22) Anmeldetag: **14.11.86**

(86) Internationale Anmeldenummer:
**PCT/EP86/00657**

(87) Internationale Veröffentlichungsnummer:
**WO 87/04673 13.08.87 Gazette 87/18**

(54) FAHRZEUG MIT EINER SICHERHEITSEINRICHTUNG.

(30) Priorität: **31.01.86 DE 3602923**

(43) Veröffentlichungstag der Anmeldung:
**19.10.88 Patentblatt 88/42**

(45) Bekanntmachung des Hinweises auf die
Patenterteilung:
**14.11.90 Patentblatt 90/46**

(84) Benannte Vertragsstaaten:
**DE FR GB IT SE**

(56) Entgegenhaltungen:
**EP-A-0 199 024**
**WO-A-85/01707**
**FR-A-2 374 188**
**FR-A-2 559 439**
**US-A-3 269 310**
**US-A-3 768 831**

(73) Patentinhaber: **AUDI AG**
**Auto-Union-Strasse 1 Postfach 220**
**D-8070 Ingolstadt (DE)**

(72) Erfinder: **BACKHAUS, Hans-Gerd**
**Siedlungsstr. 15**
**D-8071 Wettstetten (DE)**
Erfinder: **VOLLMER, Elmar**
**Goethering 16**
**D-8071 Wettstetten (DE)**

(74) Vertreter: **Engelhardt, Harald**
**Audi AG Postfach 2 20**
**D-8070 Ingolstadt (DE)**

EP 0 286 639 B1

Courier Press, Leamington Spa, England.

## Beschreibung

Die Erfindung betrifft ein Fahrzeug mit einer Sicherheitseinrichtung gemäß dem Oberbegriff des Anspruchs 1 (DE-A-1655597).

Es ist bekannt, als Sicherheitseinrichtung für einen Fahrzeuglenker im Bereich des Lenkrades ein aufblasbares Luftkissen — einen sogenannten Airbag — vorzusehen, welcher mit einer über einen Sensor zündbaren Treibladung in Verbindung steht. Eine weitere Luftkisseneinheit kann auch für den Beifahrer am Armaturenbrett angebracht sein. Die Auslösesensoren bilden einen Unsicherheitsfaktor, da sie zu Fehlauslösungen führen können. Bei bekannten, elektrisch arbeitenden Sensoren besteht zudem die Notwendigkeit, die elektrischen Zündkreise regelmäßig zu überprüfen, da Störungen, wie Kurzschluß, Massenschluß und Unterbrechungen, zum Ausfall oder zu Fehlfunktionen der Luftkisseneinheit führen können. Elektrische Verbindungen, z.B. Schleifringverbindungen zum beweglichen Lenkrad und der in der Lenkradmitte angebrachten Luftkisseneinheit, sind relativ teuer herzustellen und können bei einem Unfall bereits vor Auslösung der Sensoren zerstört sein.

Bekannte, verwendete Auslösesensoren sind Beschleunigungsaufnehmer, die auf die Crashverzögerung bei einem Unfall reagieren. Eine Unterscheidung zwischen schnellen, betriebsmäßigen Verzögerungen und kleinen Bagatellunfällen, bei denen eine Luftkissenauslösung nicht stattfinden soll und einem schweren Frontalaufprall mit Zündung des Luftkissens kann um so sicherer getroffen werden, je weiter die dabei entstehenden Beschleunigungswerte auseinanderliegen. Eine Sicherung gegen eine Fehlauslösung ist auch umso besser durchführbar, je höher die Beschleunigungswerte für einen Auslösevorgang sind. Sensoren, die die Crashverzögerung zur Auslösung verwenden, führen nicht immer zu einer befriedigenden Unterscheidung.

Bei einem starken Frontaufprall eines Fahrzeugs ist häufig festzustellen, daß der Fahrzeuglenker trotz angelegtem Sicherheitsgurt mit dem Kopf auf das Lenkrad aufschlägt. Dies wird hervorgerufen durch die starke Vorverlagerung des Oberkörpers und des Kopfes oder bzw. zusätzlich durch den Umstand, daß beim Frontaufprall über die Lenksäule das Lenkrad in den Fahrgastraum verschoben wird. In der DE-A-16 55 597 wird deshalb vorgeschlagen, bei einem Frontaufprall das Lenkrad mittels eines über eine Umlenkvorrichtung geführten Seiles aus dem möglichen Kopfaufschlagbereich in Richtung auf das Armaturenbrett wegzuziehen.

Der Erfindung liegt die Aufgabe zugrunde, mit einfachen Mitteln ein gattungsgemäßes Fahrzeug mit einer Sicherheitseinrichtung so weiterzubilden, daß diese vorteilhaft in Verbindung mit einem aufblasbaren Luftkissen einsetzbar ist. Dabei soll bei geringem Bauaufwand die Sicherheit erhöht werden.

Diese Aufgabe wird mit den kennzeichnenden Merkmalen des Anspruchs 1 gelöst.

Dadurch, daß neben der Einrichtung zum Wegziehen des Lenkrades im Bereich des Lenkrades ein an sich bekanntes, aufblasbares Luftkissen vorgesehen ist, wird der große Vorteil erreicht, daß das Luftkissen in Richtung auf den Fahrzeuglenker zu aufgeblasen wird. Bei Fahrzeugen ohne eine Einrichtung zum Wegziehen des Lenkrades kann sich bei einem Frontaufprall die Lenksäule mit dem Lenkrad aufrichten, so daß das Luftkissen nicht in Richtung des Oberkörpers des Fahrzeuglenkers aufgeblasen wird, sondern möglicherweise nur den Kopf trifft. Hierdurch besteht die Gefahr ernsthafter Verletzungen, bedingt durch das Untertauchen des Oberkörpers.

Mit dem Merkmal, daß an einem bei einem Frontaufprall durch die Sicherheitseinrichtung bewegbaren und beschleunigbaren oberen Teil der Lenksäule ein Beschleunigungsaufnehmer als Auslösemechanismus zum Aufblasen des Luftkissens angebracht ist, wird erreicht, daß der Beschleunigungsaufnehmer zum Auslösen eine sehr starke Beschleunigung erfährt. Die durch das Wegziehen des Lenkrads in Fahrtrichtung nach vorne auftretenden Beschleunigungen liegen in der Größenordnung von mehreren hundert g (Erdbeschleunigung) und damit wesentlich höher als die Crashverzögerung. Vom Beschleunigungsaufnehmer werden die hohen Lenkradbeschleunigungen gemessen und bewertet, so daß der Auslösemechanismus sehr sicher gegen unbeabsichtigte Auslösungen wegen der hohen zur Verfügung stehenden Auslösekraft gemacht werden kann. Weiter kann über den Auslösemechanismus gut unterschieden werden, ob nur ein geringer Aufprall vorliegt, bei dem das Aufblasen des Luftkissens noch nicht ausgelöst werden soll oder ein starker Aufprall mit einer Verschiebung des Antriebsaggregats gegenüber der Karosserie bei einem starken Aufprall mit erforderlicher Luftkissenauslösung.

Der Auslösemechanismus kann rein mechanisch arbeiten, wodurch störanfällige und insbesondere bei Unfällen unsichere, elektrische Verbindung zwischen der Luftkisseneinheit und dem Bordnetz über Schleifringe, Kabel, Schalter, etc. entfallen können. Weiter kann eine Überwachung und Kontrolle solcher elektrischen Zündkreise durch die Unabhängigkeit von der Bord-Energieversorgung entfallen.

Durch die örtlich enge Anordnung der Luftkisseneinheit und des Auslösemechanismus am Lenkrad sind auch bei Verwendung von pyrotechnischen Leitungen oder direkten mechanischen Verbindungen zwischen dem auf Beschleunigung ansprechenden Auslösemechanismus und dem Gasgenerator der Luftkisseneinheit die erforderlichen kurzen Auslösezeiten gewährleistet.

Eine vorteilhafte Ausbildung eines Beschleunigungsaufnehmers bzw. Auslösemechanismus zum Aufblasen des Luftkissens ist in Anspruch 2 angegeben. Dabei wird eine bei einem Frontaufprall verzögerbare Sensormasse zwischen einem durch eine Feder vorgespannten Schlagbolzen und einer Zündeinrichtung für einen Gasgenerator der Luftkisseneinheit verwendet. Bei einem Aufprall wird die Sensormasse aus dem Bereich des Schlagbolzens wegbewegt, wodurch dieser plötzlich freigegeben wird und aufgrund der Federvorspannung auf die Zündeinrichtung schlägt. Ein solcher Auslösemechanismus ist einfach und kompakt herstellbar und sicher in seiner Funktion. Wegen der großen, zur Verfügung stehenden Beschleunigungskräfte, könnte jedoch eine Auslösung einer Zündeinrichtung auch unmittelbar durch die Bewegung der Sensormasse erfolgen, wobei die Sensormasse als Schlagbolzen wirken würde.

Mit Anspruch 3 wird eine vorteilhafte Ausgestaltung eines Auslösemechanismus der Sicherheitseinrichtung für einen Beifahrer gegeben. Da auf der Beifahrerseite kein Lenkrad weggezogen wird, stehen dort für eine Auslösung eines weiteren Luftkissens nicht die vorstehend beschriebenen hohen Beschleunigungswerte zur Verfügung. Um auch hier eine sichere Auslösung zu erreichen, die unerwünschte Auslösungen insbesondere auch bei einem nur leichten Aufprall zu verhindert, ist ein Auslösemechanismus vorgesehen, der ebenfalls einen federvorgespannten Schlagbolzen gegenüber einer Zündeinrichtung enthält. Der Schlagbolzen und die Zündeinrichtung sind jedoch hier durch eine Verriegelung auf Abstand gehalten, wobei die Verriegelung direkt mit dem über eine Umlenkeinheit geführten Seil verbunden ist. Bei einem stärkeren Frontaufprall, bei dem eine Relativbewegung zwischen dem Antriebsaggregat und der Karosserie bzw. dem Befestigungspunkt der Umlenkeinheit erfolgt, wird die Verriegelung gelöst und die Zündeinrichtung durch den Schlagbolzen betätigt.

Ein rein mechanisch arbeitender Auslösemechanismus ohne elektrische Verbindungen wird nach Anspruch 4 erreicht, wenn die Zündeinrichtung ein Zündhütchen mit einer pyrotechnischen Leitung zum Gasgenerator enthält. Ein Anschluß an das elektrische Bordnetz ist dabei nicht erforderlich.

Der vorbeschriebene Auslösemechanismus mit dem vorgespannten Schlagbolzen ist jedoch auch verwendbar, wenn die Zündeinrichtung einen elektrischen Zündkreis enthält. Der Schlagbolzen kann dabei den elektrischen Zündkreis für eine Auslösung sicher in definierten Gefahrenfällen aktivieren.

Gemäß Anspruch 6 ist es zweckmäßig, die Luftkisseneinheit und den Auslösemechanismus in einer Einheit zusammenzufassen, die einfach vormontierbar und ggf. nachrüstbar ist.

Anhand eines Ausführungsbeispiels wird die Erfindung mit weiteren Merkmalen, Einzelheiten und Vorteilen näher erläutert.

Es zeigen

Fig. 1 eine schematische Draufsicht auf die Fahrer- und Beifahrerposition im Bereich des Armaturenbretts,

Fig. 2 eine schematische Darstellung eines mechanischen Auslösemechanismus.

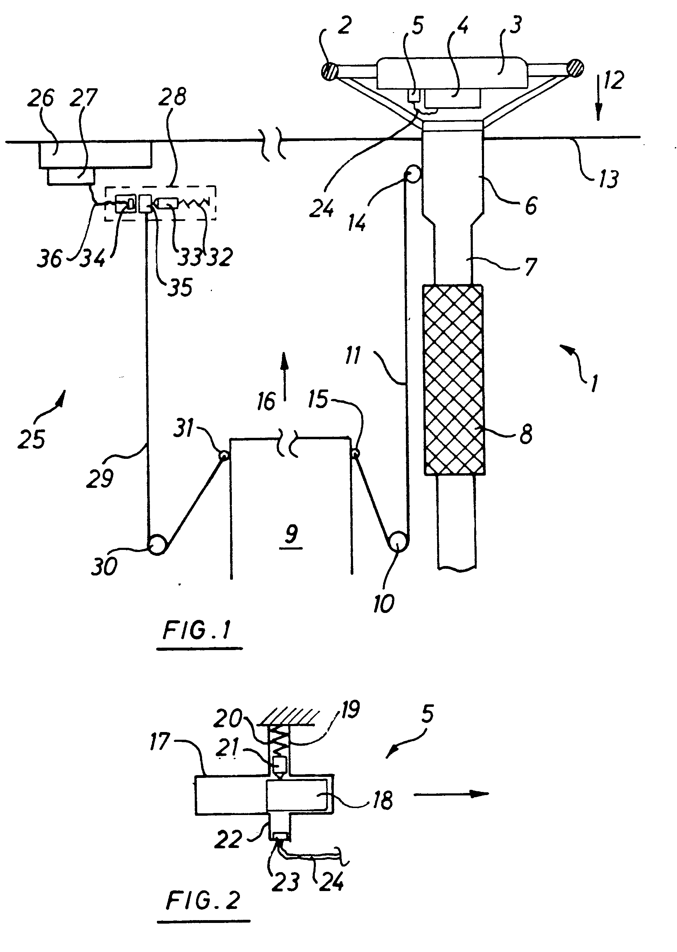

Fig. 1 zeigt eine Sicherheitseinrichtung 1 mit einem Lenkrad 2, einer Luftkisseneinheit 3 in der Prallplatte des Lenkrads 2, mit einem Gasgenerator 4, einem Auslösemechanismus 5, einem mit dem Lenkrad 2 verbundenen Mantelrohr 6, einer Lenksäule 7, einem Gitterrohr 8, einem Motorblock 9, einer Umlenkeinheit 10 und einem Seil 11. Die Sicherheitseinrichtung 1 ist für den Fahrzeuglenker bestimmt. Bei einem Frontaufprall wird das Lenkrad 2 in Richtung des Pfeiles 12 auf das Armaturenbrett 13 hin aus einem möglichen Kopfaufschlagbereich des Fahrzeuglenkers gezogen. Dazu ist das Seil 11 an einem Befestigungspunkt 14 am Mantelrohr 6 und an einem Befestigungspunkt 15 am Motorblock 9 verbunden. Bei einem stärkeren Frontaufprall wird der Motorblock 9 entlang dem Pfeil 16 nach hinten (in Fig. 1 nach oben) verschoben. Diese Bewegung wird über das Seil 11 aufgrund der Umlenkeinheit 10, die im wesentlichen als Rolle ausgeführt ist, auf das Lenkrad 2 als Zugbewegung übertragen, wobei das Gitterrohr 8 in der Lenksäule 7 gewollt zusammengeschoben wird. Diese Bewegung, bei der mehrere hundert g Beschleunigung auftreten, wird auch zur Auslösung der Luftkisseneinheit 3 verwendet.

Dazu ist der Auslösemechanismus 5 vorgesehen, der in Fig. 2 näher dargestellt ist. In einem rohrförmigen Gehäuse 17 ist eine Sensormasse 18, die weniger als die Hälfte der Länge des Gehäuses 17 einnimmt, beweglich gelagert und an einer Gehäuseseite gehalten. In einem senkrecht zum Gehäuse 17 stehenden Rohrstück 19 ist mit Hilfe einer Feder 20 ein mit einer Spitze versehener Schlagbolzen 21 gehalten. Gegenüber dem Schlagbolzen 21 liegt in einer Vertiefung 22 ein Zündhütchen 23, das über eine pyrotechnische Leitung 24 Verbindung mit dem Gasgenerator 4 hat (siehe auch Fig. 1). Mit dem Pfeil ist die Fahrtrichtung des Fahrzeugs und damit die Einbaurichtung des Auslösemechanismus 5 angegeben.

Die Sicherheitseinrichtung 1 hat folgende Funktion: Bei einem stärkeren Frontaufprall wird der Motorblock 9, bzw. damit verbundene Aggregatteile entlang dem Pfeil 16 verschoben, wodurch das Lenkrad 2 und damit der Auslösemechanismus 5 stark in Fahrtrichtung beschleunigt weggezogen werden. Aufgrund der Trägheit der Sensormasse 18 gelangt diese auf die linke Seite des mit dem bewegten Lenkrad verbundenen Gehäuses 17, wodurch der Weg für den Schlagbolzen 21 auf das Zündhütchen 23 für eine Auslösung der Luftkisseneinheit 3 bzw. des Gasgenerators 4 freigegeben wird.

Die Sicherheitseinrichtung 25 ist einfacher aufgebaut, da das Luftkissen nicht aus einem betriebsmäßig beweglichen und während eines Frontaufpralls stark beschleunigten Bauteils austritt. Die Sicherheitseinrichtung 25 enthält eine Luftkisseneinheit 26 mit einem Gasgenerator 27, einem Auslösemechanismus 28, einem Seil 29, einer Umlenkeinrichtung 30 und einem Befestigungspunkt 31 für das Seil 29 am Motorblock 9, bzw. einem damit verbundenen Bauteil. Der Auslösemechanismus besteht ebenfalls aus einem mit einer Feder 32 vorgespannten Schlagbolzen 33 und einem gegenüberliegenden Zündhütchen 34, wobei der Schlagbolzen 33 und das Zündhütchen 34 durch einen Riegel 35 voneinander getrennt sind. Das Zündhütchen 34 hat über eine pyrotechnische Leitung 36 Verbindung mit dem Gasgenerator 27. Das Seil 29 ist direkt am Riegel 35, der als Distanzstück ausgebildet ist, befestigt.

Die Sicherheitseinrichtung 25 hat folgende Funktion: Bei einem Frontaufprall wird die Bewegung des Motorblocks 9 entlang dem Pfeil 16 über die Umlenkeinrichtung 30 direkt auf den Riegel 35 mit Hilfe des Seiles 29 übertragen. Dadurch wird der Weg für den Schlagbolzen 33 auf das Zündhütchen 34 freigegeben und der Gasgenerator 27 über die Leitung 36 gezündet.

Der Auslösemechanismus 28 ist zur Veranschaulichung schematisch und vergrößert dargestellt und bildet zweckmäßig mit der Luftkisseneinheit 26 bzw. dem Gasgenerator 27 eine Einheit.

Der Riegel 35 und die Sensormasse 18 können vor dem Auslösevorgang in an sich bekannter Weise, z. B. durch (nicht dargestellte) Sollbruchverbindungen sicher und ohne die Gefahr von Fehlauslösungen gehalten werden.

Zusammenfassend wird festgestellt, daß mit der Erfindung ein Fahrzeug mit einer Sicherheitseinrichtung vorgeschlagen wird, die aus einer vorteilhaften Verbindung eines aufblasbaren Luftkissens mit geeignetem Auslösemechanismus und einem bei einem Frontaufprall wegziehbaren Lenkrad besteht.

## Patentansprüche

1. Fahrzeug mit einer Sicherheitseinrichtung, die aus einem mit einem Lenkrad und einem Antriebsaggregat verbundenen Seil besteht, das über eine Umlenkeinrichtung die bei einem Frontaufprall auftretende Relativverschiebung zwischen dem Antriebsaggregat und dem Befestigungspunkt der Umlenkeinheit an einem Karosseriebauteil auf das Lenkrad überträgt, so daß dieses bei einem Frontaufprall aus dem möglichen Kopfaufschlagbereich in Richtung auf das Armaturenbrett gezogen wird,
dadurch gekennzeichnet,
daß am Lenkrad (2) ein an sich bekanntes, aufblasbares Luftkissen (3) (Airbag) angeordnet ist und
daß an einem bei einem Frontaufprall durch die Sicherheitseinrichtung (1) bewegbaren und beschleunigbaren oberen Teil (6) der Lenksäule ein Beschleunigungsaufnehmer als Auslösemechanismus (5) zum Aufblasen des Luftkissens (3) angebracht ist.

2. Fahrzeug nach Anspruch 1, dadurch gekennzeichnet, daß der Beschleunigungsaufnehmer (5) aus einer durch die Lenkradbewegung bei einem Frontaufprall verzögerbare Sensormasse (18) zwischen einem durch eine Feder (20) vorgespannten Schlagbolzen (21) und einer Zündeinrichtung (23) für einen Gasgenerator (4) der Luftkisseneinheit (3) besteht.

3. Fahrzeug nach einem der Ansprüche 1 oder 2, dadurch gekennzeichnet, daß die Sicherheitseinrichtung (25) insbesondere für einen Beifahrer außerdem aus einem mit dem Antriebsaggregat (9) über eine Umlenkeinheit (30) geführten Seil (29) und als Auslösemechanismus (28) aus einem durch eine Feder (32) vorgespannten Schlagbolzen (33) und einer Zündeinrichtung (34) besteht, wobei zwischen Schlagbolzen (33) und Zündeinrichtung (34) eine direkt mit dem Seil (29) verbundene Verriegelung (35) angebracht ist, die durch die Seilbewegung bei einem Frontaufprall geöffnet wird.

4. Fahrzeug nach Anspruch 2 oder 3, dadurch gekennzeichnet, daß die Zündeinrichtung ein Zündhütchen (23, 34) mit angeschlossener pyrotechnischer Leitung (24, 36) zum Gasgenerator (4, 27) ist.

5. Fahrzeug nach Anspruch 2 oder 3, dadurch gekennzeichnet, daß die Zündeinrichtung eine durch den Schlagbolzen (21, 33) aktivierbare elektrische Verbindung ist.

6. Fahrzeug nach einem der Ansprüche 1 bis 5, dadurch gekennzeichnet, daß die Luftkisseneinheit (3, 26) und der Auslösemechanismus (5, 28) eine Einheit bilden.

## Revendications

1. Véhicule équipé d'un dispositif de sécurité se composant d'un câble qui est relié à un volant de direction et à un groupe moteur et qui transmet au volant, en passant par un dispositif de renvoi, le déplacement relatif se produisant, en cas de collision frontale, entre le groupe moteur et le point de fixation du dispositif de renvoi sur un élément de la carrosserie, de telle sorte qu'en cas de collision frontale, le volant soit attiré en direction du tableau de bord hors de portée de la tête qui risque de le heurter, caractérise en ce qu'il est disposé, sur le volant (2), un coussin pneumatique gonflable (airbag) (3) en soi connu, et en ce qu'il est monté, sur une partie supérieure (6) de la colonne de direction, susceptible de déplacement et d'accélération sous l'action du dispositif de sécurité (1) en cas de collision frontale, un capteur d'accélération qui sert de mécanisme de déclenchement (5) pour le gonflage du coussin pneumatique (3).

2. Véhicule selon la revendication 1, caractérisé en ce que le capteur d'accélération (5) est constitué par une masse détectrice (18) décélérable par le mouvement du volant en cas de collision frontale, entre un percuteur (21) précontraint par un ressort (20) et un dispositif d'amorçage (23) pour un générateur de gaz (4) de l'ensemble à coussin pneumatique (3).

3. Véhicule selon la revendication 1 ou 2, caractérisé en ce qu'en particulier pour un passager assis à côté du conducteur, le dispositif de sécurité (25) se compose en outre d'un câble (29) relié au groupe moteur (9) en passant sur un dispositif de renvoi (30) et, en tant que mécanisme de déclenchement (28), d'un percuteur (33) precontraint par un ressort (32) et d'un dispositif d'amorçage (34), percuteur et dispositif d'amorçage entre lesquels est monté un verrou (35) qui est raccordé directement au câble (29) et qui

ouvert par le mouvement du câble en cas de collision frontale.

4. Véhicule selon la revendication 2 ou 3, caractérisé en ce que le dispositif d'amorçage est une capsule-amorce (23, 34) à laquelle est raccordée une conduite pyrotechnique (24, 36) vers le générateur de gaz (4, 27).

5. Véhicule selon la revendication 2 ou 3, caractérisé en ce que le dispositif d'amorçage est une connexion électrique rendue active par le percuteur (21, 33).

6. Véhicule selon l'une quelconque des revendications 1 à 5, caractérisé en ce que l'ensemble à coussin pneumatique (3, 26) et le mecanisme de déclenchement (5, 28) forment une unité.

**Claims**

1. Vehicle having a safety device which consists of a cable connected to a steering wheel and a drive assembly, said cable transmitting to the steering wheel via a deflection device the relative displacement, occurring in the event of a frontal impact, between the drive assembly and the securing point of the deflection unit on a vehicle body component, so that said steering wheel is pulled in the event of a frontal impact out of the possible region of impact of the head in the direction of the dashboard, characterized in that an inflatable airbag (3) known per se is arranged on the steering wheel (2), and in that an acceleration sensor is mounted as trigger mechanism (5) for inflating the airbag (3) on an upper part (6) of the steering wheel column which can be moved and accelerated by the safety device (1) in the event of a frontal impact.

2. Vehicle according to Claim 1, characterized in that the acceleration sensor (5) consists of a sensor mass (18), which can be decelerated by the steering wheel motion in the event of a frontal impact, between a striking pin (21) pretensioned by a spring (20) and a firing device (23) for a gas generator (4) of the air bag unit (3).

3. Vehicle according to one of Claims 1 or 2, characterized in that the safety device (25) consists, in particular for a front seat passenger, in addition of a cable (29) guided by the drive assembly (9) via a deflection unit (30) and as trigger mechanism (28) of a striking pin (33) pretensioned by a spring (32) and of a firing device (34), a locking device (35) connected directly to the cable (29) being mounted between striking pin (33) and firing device (34), said locking device being opened by the cable motion in the event of a frontal impact.

4. Vehicle according to Claim 2 or 3, characterized in that the firing device is a detonating cap (23, 34) with connected pyrotechnic line (24, 36) to the gas generator (4, 27).

5. Vehicle according to Claim 2 or 3, characterized in that the firing device is an electrical connection which can be actuated by the striking pin (21, 33).

6. Vehicle according to one of Claims 1 to 5, characterized in that the airbag unit (3, 26) and the trigger mechanism (5, 28) form a unit.

FIG.1

FIG.2

1